# FASCICULE DE BREVET EUROPEEN

(11) **EP 2 789 076 B1**
(45) Date de publication et mention de la délivrance du brevet: **14.03.2018**
(21) Numéro de dépôt: 12791469.5
(22) Date de dépôt: 22.11.2012
(51) Int. Cl.: H02K 15/09, H02K 3/52

(54) **DISPOSITIF DE GUIDAGE D'UN ENSEMBLE DE FILS ELECTRIQUES POUR ROTOR DE MOTEUR ELECTRIQUE**
VORRICHTUNG ZUM FÜHREN EINES SATZES ELEKTRISCHER DRÄHTE FÜR EINEN ELEKTROMOTORROTOR
DEVICE FOR GUIDING A SET OF ELECTRICAL WIRES FOR ELECTRIC MOTOR ROTOR

(30) Priorité: 08.12.2011 FR 1161345
(43) Date de publication de la demande: 15.10.2014
(73) Titulaire: Renault S.A.S., 92100 Boulogne-Billancourt (FR)
(72) Inventeur: BIROLLEAU, Damien, F-78180 Montigny Le Bretonneux (FR); BRUYERE, Nicolas, F-77240 Vert Saint Denis (FR); ORVAL, Patrick, F-91400 Orsay (FR); FORMOSA, Denis, F-95350 Saint Brice Sous Foret (FR)
(86) Numéro de dépôt international: PCT/EP2012/073304
(87) Numéro de publication internationale: WO 2013/083407

(56) Documents cités:
- US-A- 2 872 605
- US-A1- 2004 155 550
- US-A1- 2007 194 653

## Description

La présente invention concerne le domaine des générateurs à grande vitesse et, plus particulièrement des dispositifs pour fixer des bobines de fils électriquement conducteurs aux rotors de tels générateurs, et notamment autour d'un bloc électriquement conducteur du rotor.

Un moteur électrique à rotor bobiné, tel qu'une machine électrique utilisée dans un véhicule automobile à traction électrique, est réalisé à partir de fils électriquement conducteurs, tels que des fils de cuivre émaillés. Les fils électriquement conducteurs sont bobinés autour d'un noyau réalisé par un empilement de tôles électriquement conductrices.

Les rotors adaptés aux générateurs à grande vitesse sont soumis à des conditions de fonctionnement difficiles, et notamment à de fortes sollicitations mécaniques dans le sens radial. Il est donc nécessaire de bien maintenir les bobinages d'un rotor soumis à de fortes forces centrifuges. Les rotors de tels générateurs doivent donc être adaptés pour fonctionner dans de telles conditions.

On peut se référer à cet égard au document EP1421663 qui décrit un rotor comportant un arbre s'étendant axialement, quatre pièces polaires s'étendant radialement en s'écartant de l'arbre, quatre bras raccordés respectivement à une pièce polaire et des moyens de maintien d'un bobinage d'un rotor de générateur à haute vitesse. Les moyens de maintien sont constitués par quatre supports de forme courbe recouvrant chacun un bras, quatre chapeaux de coiffe recouvrant chacun un support permettant d'empêcher le déplacement des fils des bobines pendant la rotation du rotor et des coins de remplissage entre chaque support pour procurer un support additionnel aux enroulements des bobines.

Toutefois, un tel dispositif de maintien est constitué d'une pluralité de pièces distinctes de sorte qu'il est complexe à mettre en oeuvre et ne permet pas de s'adapter aux pièces polaires lors des erreurs de tolérance de fabrication des différentes pièces. Le document US 2 872 605 A divulgue une autre dispositif de guidage de l'art antérieur.

La présente invention a donc pour but de remédier à ces inconvénients.

Un objectif de l'invention est donc de fournir un rotor intégrant un dispositif de guidage constitué d'une unique pièce permettant la fixation et le maintien d'un bobinage de fils de façon fiable, tout en étant peu coûteux.

Un autre objectif de l'invention est de fournir un tel dispositif permettant une déformation radiale et angulaire afin d'être simple à mettre en oeuvre sur un rotor.

Selon un mode de réalisation, l'invention a pour objet un dispositif de guidage pour le bobinage de fils électriquement conducteurs autour d'un bloc électriquement conducteur d'un rotor de moteur électrique comprenant un arbre s'étendant axialement dans le rotor, ledit bloc électriquement conducteur étant pourvu d'au moins quatre encoches de réception des fils.

Le dispositif de guidage comprend au moins deux branches s'étendant radialement en s'écartant de l'arbre et disposées à 90° l'une de l'autre, lesdites branches étant reliées par un moyen de liaison élastique.

Ainsi, le dispositif de guidage, constitué d'une unique pièce, permet de simplifier sa construction et facilite sa mise en place sur le rotor grâce aux moyens de liaison élastiques. En effet, la liaison élastique entre chaque branche adjacente confère une bonne élasticité du dispositif de guidage pour sa mise en place sur le bloc électriquement conducteur, notamment sur chaque pôle, ainsi qu'une bonne tolérance aux erreurs dues à la fabrication industrielle du rotor du dispositif de guidage. La liaison élastique permet également un déplacement indépendant de chaque pole de la machine électrique, ainsi que de chaque branche du dispositif de guidage dans le sens radial. Ceci permet, outre la facilité de mise en place, de s'adapter aux mouvements radiaux durant le fonctionnement du rotor, tel que par exemple, aux mouvements des pôles dûs à la dilatation thermique des pôles...

Avantageusement, chaque branche du moyen de guidage comprend au moins deux ensembles rainures de guidage destinées à coopérer avec les encoches de réception du bloc conducteur. Ainsi, chaque ensemble de fils est positionné respectivement dans une encoche du bloc conducteur, c'est-à-dire d'un des pôles et dans une pluralité de rainures de guidage d'une branche.

Le moyen de liaison élastique peut présenter une forme arrondie, tel que par exemple, une forme en oméga. Une telle forme permet d'obtenir un dispositif de guidage permettant de s'adapter à un déplacement radial des pôles, ainsi qu'à se déplacer angulairement afin de se centrer sur les pôles lors de sa mise en place.

Avantageusement, chaque branche comprend une portion principale de réception d'un ensemble de fils délimitée radialement par deux épaulements présents respectivement à une extrémité de chaque branche, chaque portion principale étant destinée à coopérer avec une encoche de réception et comprend un ensemble de rainures de guidage. La portion principale permet à l'ensemble de fils de rester positionné entre deux épaulements de chaque branche et donc dans l'encoche de réception de chaque pôle.

Chaque branche comprend, en outre, au moins deux moyens de positionnement en saillie vers le bloc conducteur, tel que par exemple des plots de positionnement, destinés à coopérer avec une pluralité de perçages pratiqués dans le bloc conducteur. Ainsi chaque branche est positionnée indépendamment sur le bloc conducteur, et notamment sur un pôle.

Les perçages peuvent être de forme ronde, oblongue, ou en forme de goutte d'eau. La forme allongée des perçages permet au dispositif de guidage de garder sa flexibilité dans le sens radial, et un positionnement rapide et efficace sur les pôles du rotor. En effet, lors de la mise en place du dispositif de guidage sur le bloc conducteur, le dispositif de guidage est d'abord légèrement étiré radialement de manière à ce que chaque plot vienne en position dans les différents perçages. Le dispositif de guidage est ensuite relâché et grâce à l'effet élastique des liaisons élastiques, le dispositif de guidage revient en position initiale, de sorte que les plots sont soumis à un effort radial permettant aux plots d'être maintenus en position dans le perçage correspondant et donc de maintenir le dispositif de guidage sur le bloc conducteur. La forme des perçages en goutte d'eau permet un meilleur centrage du dispositif de guidage sur chaque pôle.

De préférence, le dispositif de guidage comprend quatre branches symétriques par rapport à l'axe de symétrie du rotor. Le bloc électriquement conducteur comprend à cet effet huit encoches. La symétrie du dispositif de guidage lui permet d'être positionné indifféremment sur un pôle du rotor. Par ailleurs, le dispositif de guidage est conçu pour être utilisé des deux côtés.

Avantageusement, chaque moyen de liaison élastique adjacent est relié par une portion arrondie, délimitant une partie centrale de passage de l'arbre du rotor. La partie de passage substantiellement circulaire peut présenter un rayon intérieur d'au moins 35 mm, par exemple de 46mm. Ce rayon est suffisant pour qu'au montage de la machine électrique, on puisse faire passer à travers le dispositif non seulement l'arbre du rotor mais aussi le support des bagues de connexions électriques du bobinage à l'alimentation électrique extérieure. Le support bagues dispose aussi de bornes de connexions électriques au bobinage qui s'écartent radialement de l'arbre et peuvent dépasser la partie centrale de passage. De préférence, les formes élastiques en oméga doivent avoir une zone de passage suffisante pour laisser passer à travers les bornes de connexions. Cette caractéristique permet d'économiser l'utilisation d'une deuxième presse au montage de la machine, la presse positionnant l'arbre dans le bloc conducteur étant la même que la presse positionnant les bagues du rotor.

Selon un second aspect, l'invention concerne un rotor de moteur électrique comprenant un arbre s'étendant axialement dans le rotor, un bloc électriquement conducteur s'étendant radialement en s'écartant de l'arbre du rotor et un dispositif de guidage tel que décrit précédemment de fils électriquement conducteurs autour dudit bloc.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement une vue en perspective d'un rotor de moteur électrique selon l'invention ;
- la figure 2 illustre une vue de face en perspective d'un dispositif de guidage selon la figure 1 ;
- la figure 3 illustre une vue de derrière en perspective d'un dispositif de guidage selon la figure 1 ;
- la figure 4 représente partiellement une vue en coupe du rotor selon la figure 1,
- la figure 5 représente schématiquement un perçage du rotor selon la figure 4, et
- la figure 6 illustre une vue en perspective d'un dispositif de guidage selon un autre mode de réalisation.

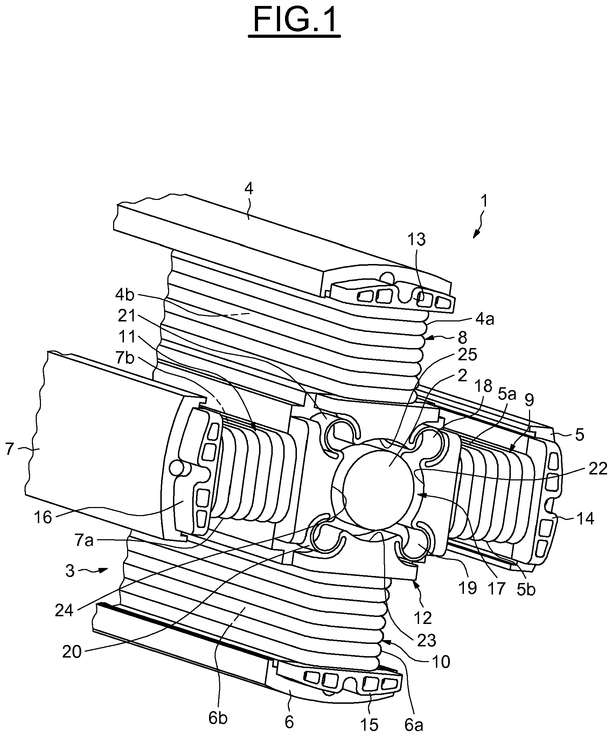

Tel qu'illustré sur la figure 1, un rotor de machine électrique, référencée 1 dans son ensemble, comprend un arbre 2 qui s'étend axialement au travers le rotor 1 et un bloc électriquement conducteur 3 qui s'étend radialement en s'écartant de l'arbre 2.

Le bloc électriquement conducteur 3 comprend quatre pôles 4, 5, 6, 7 disposés à un angle, par exemple, de 90° les uns des autres. Chaque pôle 4, 5, 6, 7 comprend deux faces latérales comportant chacune une encoche de réception 4a, 4b, 5a, 5b, 6a, 6b, 7a, 7b d'un ensemble de fils électriquement conducteurs 8, 9, 10, 11. De manière alternative, les quatre pôles 4, 5, 6, 7 peuvent être couplés ensemble ou réalisés dans un même empilement de tôles de manière à former un empilement de tôles en croix.

Le rotor 1 comprend un dispositif de guidage 12 des fils électriquement conducteurs 8, 9, 10, 11 autour du bloc électriquement conducteur 3 et, notamment autour de chaque pôle 4, 5, 6, 7.

Dans l'exemple illustré sur les figures, le dispositif de guidage 12 comprend quatre branches 13, 14, 15, 16 s'étendant radialement en s'écartant de l'arbre 2 du rotor 1 et symétriques par rapport à l'axe du rotor 1. Chaque branche 13, 14, 15, 16 est destinée à être fixée sur un pôle 4, 5, 6, 7 du rotor 1, de sorte que le bobinage de quatre bobines de fils 8, 9, 10, 11 est possible. Le dispositif de guidage 12 présente une forme substantiellement en croix et une partie centrale 17 de passage de l'arbre 2 du rotor 1. Les branches 13, 14, 15, 16 du dispositif de guidage 12 sont disposées à 90° les unes des autres et reliées par un moyen de liaison élastique 18, 19, 20, 21, tel que par exemple une forme arrondie reliant deux branches adjacentes, ou encore une forme en oméga. Ainsi, le dispositif de guidage 12, constitué d'une unique pièce, permet de simplifier sa construction, et facilite, grâce aux moyens de liaison élastique 18, 19, 20, 21, sa mise en place sur le rotor 1.

En effet, la forme en oméga entre chaque branche 13, 14, 15, 16 adjacente confère une bonne élasticité du dispositif de guidage 12 pour sa mise en place sur le bloc électriquement conducteur 2, notamment sur chacun des pôles 4, 5, 6, 7, ainsi qu'un déplacement indépendant de chaque pôle 4, 5, 6, 7 du rotor 1 dans le sens radial. Ceci permet, outre une facilité de mise en place, de s'adapter aux mouvements radiaux durant le fonctionnement du rotor 1.

Les moyens de liaison élastique 18, 19, 20, 21 sont reliés par une portion arrondie 22, 23, 24, 25, de manière à délimiter le passage 17 substantiellement circulaire destiné à entourer l'arbre 2 du rotor 1. Ce passage 17 présente un rayon intérieur, par exemple, de 46 mm.

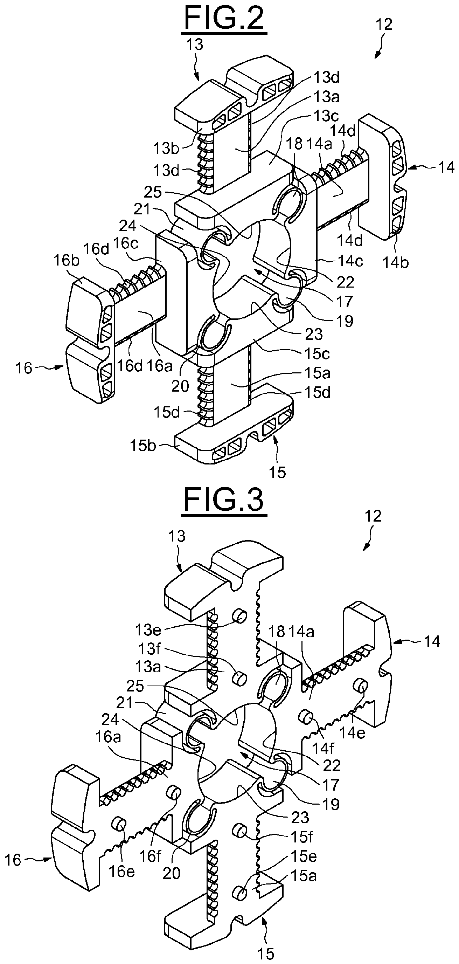

Tel qu'illustré en détail sur la figure 2, et dont uniquement la description de la branche 13 sera détaillée, les autres branches 14, 15, 16 étant identiques à la branche 13, chaque branche 13 comporte une portion principale 13a, destinée à recevoir un ensemble de fils conducteurs 8, et délimitée par deux épaulements 13b, 13c réalisés respectivement à une extrémité de la branche 13 correspondante. Chacun des bords latéraux de la portion principale 13a est disposé en regard d'une encoche 4a, 4b pratiquée sur le bloc conducteur 3, de sorte qu'une portion principale 13a permet à un ensemble de fils 8 de rester positionné entre deux épaulements 13b, 13c d'une branche 13 et dans les encoches de réception 4a, 4b de chaque pôle 4. Chaque fil conducteur 8 est donc bobiné autour de la portion principale 13a du dispositif de guidage 12 entre les deux épaulements 13b, 13c selon une direction parallèle aux épaulements 13b, 13c. Les épaulements 13b, 13c possèdent une épaisseur permettant d'enrouler le fil conducteur 8 sur plusieurs couches autour de la portion principale 13a et permettant de maintenir l'ensemble de fils conducteurs 8 dans l'axe de la portion principale 13a.

La portion principale 13a comprend une pluralité de rainures de guidage 13d pratiquées sur chaque bord latéral de la portion principale 13a et permettant de guider la première couche de bobinage 8 afin d'obtenir une bonne répartition du bobinage des fils conducteurs 8 sur toute la longueur de la portion principale 13a séparant les deux épaulements 13b, 13c d'une branche 13. Chaque bord latéral, et notamment la pluralité de rainures 13d d'une portion principale 13a est aligné avec une encoche 3c, 3d pratiquée sur le bloc conducteur 3, afin de placer correctement les fils conducteurs 8.

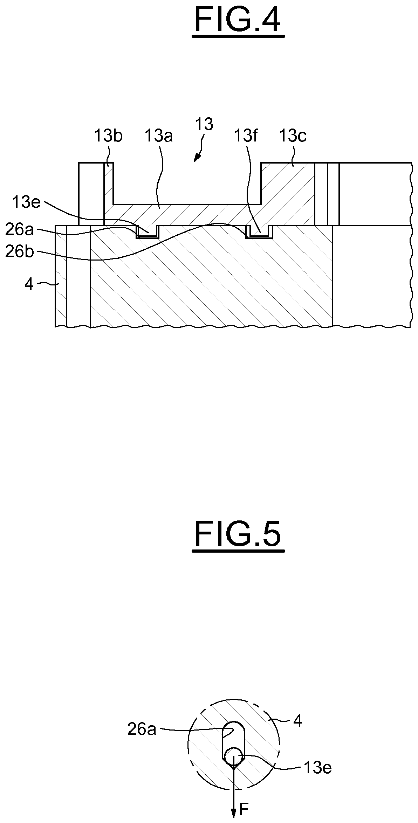

Telle qu'illustrée sur les figures 3 et 4, chaque portion principale 13a, 14a, 15a, 16a comporte sur une face en contact avec le bloc conducteur 3, opposée à la face en contact avec les fils conducteurs 8, 9, 10, 11, deux plots de positionnement alignés 13e et 13f, 14e et 14f, 15e et 15f, 16e et 16f, en saillie vers le bloc conducteur 3 et destinés à coopérer respectivement avec des perçages 26a, 26b pratiqués sur le bloc conducteur 3. Ainsi chaque branche 13, 14, 15, 16 peut être positionnée indépendamment d'une autre branche sur le bloc conducteur 3. Par exemple, le premier plot 13e, 14e, 15e, 16e, disposé vers l'extérieur de chaque branche 13, 14, 15, 16, est un plot de centrage et le deuxième plot 13f, 14f, 15f, 16f, disposé vers l'intérieur de chaque branche 13, 14, 15, 16, est un plot de guidage, de sorte qu'un seul des deux plots d'un même pôle est mis en contrainte. Le plot de centrage sur chaque pôle pourrait également être celui disposé vers l'intérieur de chaque pôle 4, 5, 6, 7.

Les perçages 26a, 26b peuvent avoir, à titre d'exemple non limitatif, une forme ronde, oblongue ou de goutte d'eau. La forme allongée des perçages 26a, 26b permet au dispositif de guidage 12 de garder sa flexibilité dans le sens radial, et son positionnement rapide et efficace sur les pôles 4, 5, 6, 7 du rotor 1. Les plots de centrage 13e, 14e, 15e, 16e, sur lesquels est mis en contrainte le dispositif de guidage 12 sont destinés à coopérer avec un perçage 26a de préférence en forme de goutte d'eau car la mise en contrainte dans un angle permet de mieux centrer le dispositif de guidage 12 sur la largeur de la branche du rotor 1. Les plots de guidage 13f, 14f, 15f, 16f peuvent coopérer avec un perçage 26b de forme quelconque ronde, oblongue ou de goutte d'eau.

En effet, tel qu'illustré en détail sur la figure 5 dont uniquement la description du centrage de la branche 13 sera détaillée, les autres branches 14, 15, 16 étant identiques à la branche 13, lors de la mise en place du dispositif de guidage 12 sur le bloc conducteur 3, le dispositif de guidage 12 est d'abord légèrement étiré radialement de manière à ce que chaque plot de centrage 13e vienne en position dans les différents perçages 26a. Le dispositif de guidage 12 est ensuite relâché et grâce à l'effet élastique des liaisons élastiques 18, 19, 20, 21, le dispositif de guidage 12 revient en position initiale suivant la direction de la flèche F, de sorte que les plots 13e sont soumis à un effort radial permettant aux plots 13e d'être maintenus en position dans le perçage correspondant 26a. Le perçage 26a en goutte d'eau présente une forme en V permettant au plot de centrage 13e du dispositif de guidage 12 de mieux se centrer.

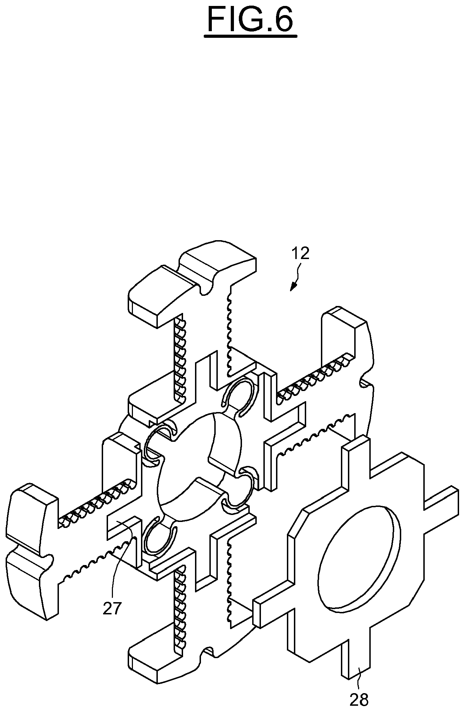

En variante, telle qu'illustrée sur la figure 6, dans lequel les mêmes éléments ont les mêmes références, ces plots de positionnement peuvent être remplacés par un profil creusé 27 dans le dispositif de guidage 12, permettant de recevoir une pièce en acier 28, de forme correspondante au profil creusé 27, soudée au bloc électriquement conducteur 3, et laissant passer l'arbre 2 du rotor 1.

Le dispositif de guidage 12 est réalisé en matériau peu conducteur et de préférence de faible perméabilité, et de haute résistance au couple température-tenue mécanique et est obtenu par exemple par moulage, tel que par exemple un matériau plastique thermodurcissable.

Grâce à l'invention qui vient d'être décrite, le dispositif de guidage constitué d'une unique pièce permet une fixation aisée sur le rotor, ainsi qu'un maintien du bobinage de fils de façon fiable, tout en étant peu coûteux.

De plus, un tel dispositif permet une déformation radiale et angulaire afin d'être simple à mettre en oeuvre sur un rotor.

## Revendications

1. Dispositif de guidage (12) pour le bobinage de fils électriquement conducteurs (8, 9) autour d'un bloc électriquement conducteur (3) réalisé par un empilement de tôles électriquement conductrices d'un rotor (1) de moteur électrique comprenant un arbre (2) s'étendant axialement dans le rotor (1), ledit bloc électriquement conducteur (3) étant pourvu d'au moins quatre encoches de réception (4a, 4b, 5a, 5b) des fils (8, 9), ledit dispositif étant **caractérisé en ce qu'**il comprend quatre branches (13, 14, 15, 16) s'étendant radialement en s'écartant de l'arbre (2) et disposées à 90° l'une de l'autre, lesdites branches (13, 14) étant reliées par un moyen de liaison élastique (18), et **en ce que** chaque branche (13, 14, 15, 16) comprend au moins deux ensembles de rainures de guidage (13d, 14d, 15d, 16d) destinées à coopérer avec les encoches de réception (4a, 4b, 5a, 5b) du bloc conducteur (3) lors de la mise en place du dispositif de guidage sur le bloc conducteur.

2. Dispositif de guidage selon la revendication 1, dans lequel le moyen de liaison élastique (18) présente une forme arrondie.

3. Dispositif de guidage selon la revendication 2, dans lequel la forme arrondie est un oméga.

4. Dispositif de guidage selon l'une quelconque des revendications précédentes, dans lequel chaque branche (13, 14) comprend une portion principale (13a, 14a) de réception d'un ensemble de fils (8, 9), délimitée radialement par deux épaulements (13b, 13c, 14b, 14c) présents respectivement à une extrémité de chaque branche (13, 14), chaque portion principale (13a, 14a) étant destinée à coopérer avec une encoche de réception (4a, 4b, 5a, 5b) et comprend les deux ensembles de rainures de guidage (13d, 14d).

5. Dispositif de guidage selon l'une quelconque des revendications précédentes, dans lequel chaque branche (13, 14) comprend au moins deux moyens de positionnement (13e, 13f, 14e, 14f) en saillie vers le bloc conducteur (3) destinés à coopérer avec une pluralité de perçages (26a, 26b) pratiqués sur le bloc conducteur (3).

6. Dispositif de guidage selon la revendication 5, dans lequel les perçages (26a, 26b) ont une forme ronde, oblongue, ou de goutte d'eau.

7. Dispositif de guidage selon l'une quelconque des revendications précédentes, comprenant quatre branches (13, 14, 15, 16).

8. Dispositif de guidage selon la revendication 7, dans lequel les quatre branches sont symétriques par rapport à l'axe de symétrie du rotor (1).

9. Dispositif de guidage selon la revendication 7 ou 8, dans lequel chaque moyen de liaison élastique adjacent (18, 19, 20, 21) est relié par une portion arrondie (22, 23, 24, 25), délimitant une partie centrale (17) de passage de l'arbre (2) du rotor (1).

10. Dispositif de guidage selon la revendication 9, dans lequel la partie de passage (17) substantiellement circulaire a un rayon intérieur d'au moins 35 mm.

11. Rotor de moteur électrique comprenant un arbre (2) s'étendant axialement dans le rotor (1), un bloc électriquement conducteur (3) s'étendant radialement en s'écartant de l'arbre (2) du rotor (1) et un dispositif de guidage (12) selon l'une quelconque des revendications précédentes de fils électriquement conducteurs (8, 9) autour dudit bloc (3).

## Patentansprüche

1. Führungsvorrichtung (12) für die Wicklung elektrisch leitender Drähte (8, 9) um einen elektrisch leitenden Block (3), der von einem Stapel elektrisch leitender Bleche eines Elektromotorrotors (1) gebildet wird, der eine Welle (2) umfasst, die sich axial in dem Rotor (1) erstreckt, wobei der elektrisch leitende Block (3) mit wenigstens vier Aufnahmenuten (4a, 4b, 5a, 5b) für die Drähte (8, 9) versehen ist, wobei die Vorrichtung **dadurch gekennzeichnet ist, dass** sie vier Arme (13, 14, 15, 16) umfasst, die sich radial von der Welle (2) weg erstrecken und um 90° zueinander versetzt angeordnet sind, wobei die Arme (13, 14) durch ein elastisches Verbindungsmittel (18) verbunden sind, und dadurch, dass jeder Arm (13, 14, 15, 16) wenigstens zwei Sätze von Führungsrillen (13d, 14d, 15d, 16d) umfasst, die dazu bestimmt sind, mit den Aufnahmenuten (4a, 4b, 5a, 5b) des leitenden Blocks (3) bei der Anbringung der Führungsvorrichtung auf dem leitenden Block zusammenzuwirken.

2. Führungsvorrichtung nach Anspruch 1, wobei das elastische Verbindungsmittel (18) eine abgerundete Form aufweist.

3. Führungsvorrichtung nach Anspruch 2, wobei die abgerundete Form eine Omega-Form ist.

4. Führungsvorrichtung nach einem der vorhergehenden Ansprüche, wobei jeder Arm (13, 14) einen Hauptabschnitt (13a, 14a) zur Aufnahme eines Satzes von Drähten (8, 9) umfasst, der radial von zwei Ansätzen (13b, 13c, 14b, 14c) begrenzt wird, die sich jeweils an einem Ende des jeweiligen Armes (13, 14) befinden, wobei jeder Hauptabschnitt (13a, 14a) dazu bestimmt ist, mit einer Aufnahmenut (4a, 4b, 5a, 5b) zusammenzuwirken, und die zwei Sätze von Führungsrillen (13d, 14d) umfasst.

5. Führungsvorrichtung nach einem der vorhergehenden Ansprüche, wobei jeder Arm (13, 14) wenigstens zwei in Richtung des leitenden Blocks (3) vorstehende Positionierungsmittel (13e, 13f, 14e, 14f) umfasst, die dazu bestimmt sind, mit einer Vielzahl von Bohrungen (26a, 26b) zusammenzuwirken, die in dem leitenden Block (3) ausgebildet sind.

6. Führungsvorrichtung nach Anspruch 5, wobei die Bohrungen (26a, 26b) eine runde oder längliche Form oder eine Wassertropfenform haben.

7. Führungsvorrichtung nach einem der vorhergehenden Ansprüche, welche vier Arme (13, 14, 15, 16) umfasst.

8. Führungsvorrichtung nach Anspruch 7, wobei die vier Arme symmetrisch bezüglich der Symmetrieachse des Rotors (1) sind.

9. Führungsvorrichtung nach Anspruch 7 oder 8, wobei benachbarte elastische Verbindungsmittel (18, 19, 20, 21) jeweils durch einen gerundeten Abschnitt (22, 23, 24, 25) verbunden sind, der einen mittleren Teil (17) des Durchgangs der Welle (2) des Rotors (1) begrenzt.

10. Führungsvorrichtung nach Anspruch 9, wobei der im Wesentlichen kreisförmige Durchgangsteil (17) einen Innendurchmesser von wenigstens 35 mm aufweist.

11. Elektromotorrotor, welcher eine Welle (2), die sich axial in dem Rotor (1) erstreckt, einen elektrisch leitenden Block (3), der sich radial von der Welle (2) des Rotors (1) weg erstreckt, und eine Vorrichtung (12) nach einem der vorhergehenden Ansprüche zur Führung elektrisch leitender Drähte (8, 9) um den Block (3) umfasst.

## Claims

1. Device (12) for guiding the winding of electrically conductive wires (8, 9) around an electrically conductive block (3) produced from a stack of electrically conductive sheet metal plates of a rotor (1) of an electric motor, comprising a shaft (2) extending axially in the rotor (1), said electrically conductive block (3) being provided with at least four notches (4a, 4b, 5a, 5b) for receiving the wires (8, 9), said device being **characterized in that** it comprises four branches (13, 14, 15, 16) extending radially away from the shaft (2) and disposed at 90° to one another, said branches (13, 14) being connected by an elastic linking means (18), and **in that** each branch (13, 14, 15, 16) includes at least two sets of guide grooves (13d, 14d, 15d, 16d) designed to cooperate with the receiving notches (4a, 4b, 5a, 5b) of the conductive block (3) when installing the guide device on the conductive block.

2. Guide device according to Claim 1, wherein the elastic linking means (18) has a rounded shape.

3. Guide device according to Claim 2, wherein the rounded shape is an omega.

4. Guide device according to any one of the preceding claims, wherein each branch (13, 14) comprises a main portion (13a, 14a) for receiving a set of wires (8, 9) which is delimited radially by two shoulders (13b, 13c, 14b, 14c) present at respective ends of each branch (13, 14), each main portion (13a, 14a) being designed to cooperate with a receiving notch (4a, 4b, 5a, 5b) and comprises including the two sets of guide grooves (13d, 14d).

5. Guide device according to any one of the preceding claims, wherein each branch (13, 14) comprises at least two positioning means (13e, 13f, 14e, 14f) projecting towards the conductive block (3) and designed to cooperate with a plurality of holes (26a, 26b) formed in the conductive block (3).

6. Guide device according to Claim 5, wherein the holes (26a, 26b) have a circular, oblong or teardrop shape.

7. Guide device according to any one of the preceding claims, comprising four branches (13, 14, 15, 16).

8. Guide device according to Claim 7, wherein the four branches are symmetrical with respect to the axis of symmetry of the rotor (1).

9. Guide device according to Claim 7 or 8, wherein each adjacent elastic linking means (18, 19, 20, 21) is connected by a rounded portion (22, 23, 24, 25) delimiting a central portion (17) through which the shaft (2) of the rotor (1) can pass.

10. Guide device according to Claim 9, wherein the substantially circular passage portion (17) has an internal radius of at least 35 mm.

11. Rotor of an electric motor comprising a shaft (2) extending axially in the rotor (1), an electrically conductive block (3) extending radially away from the shaft (2) of the rotor (1) and a device (12) according to any one of the preceding claims for guiding electrically conductive wires (8, 9) around said block (3) .
